# FASCICULE DE BREVET EUROPEEN

(11) **EP 1 188 646 B1**
(45) Date de publication et mention de la délivrance du brevet: **23.08.2006**
(21) Numéro de dépôt: 01402321.2
(22) Date de dépôt: 07.09.2001
(51) Int. Cl.: B62D 25/12, E05D 3/06

(54) **Véhicule automobile comportant des pièces de carrosserie associées à un jeu réduit**
Kraftfahrzeugkarosserie mit limitierten Spaltmassen
Car body with limited gaps between panels

(30) Priorité: 13.09.2000 FR 0011678
(43) Date de publication de la demande: 20.03.2002
(73) Titulaire: PEGUFORM FRANCE, 27950 Saint Marcel (FR)
(72) Inventeur: Brogly, Sébastien, 27950 St. Just (FR); George, Ghislain, 27200 Vernon (FR)
(74) Mandataire: Le Forestier, Eric

(56) Documents cités:
- DE-A- 4 226 437
- DE-A- 19 846 644
- FR-A- 2 407 114
- US-A- 5 101 921

## Description

L'invention concerne les systèmes d'assemblage des pièces de robe de carrosserie d'un véhicule.

Actuellement, on connaît des véhicules comprenant des pièces de robe de carrosserie, comme les ailes, le pare-chocs, la calandre, qui sont fixées de manière indépendante sur la structure du véhicule. Le capot, autre pièce de robe de carrosserie, pivote par rapport à la structure du véhicule à l'aide de charnières situées en partie arrière du capot du côté de la baie de pare-brise. Chacune de ces pièces est référencée par rapport au châssis. Il s'ensuit que la chaîne de côtes qui permet de positionner les différentes pièces de robe de carrosserie les unes par rapport aux autres passe par la structure du véhicule. La chaîne de côte de ce type de montage des pièces oblige donc à avoir des jeux importants. Cela peut engendrer des positionnements imparfaits entre les pièces et conduire à des alignements et affleurements disgracieux nuisant à l'esthétique du véhicule.

Le document DE 198 46 644 divulgue un véhicule conforme au préambule de la revendication 1.

Un but de la présente invention est de réduire au maximum ces jeux de positionnement.

Pour atteindre ce but, on prévoit, selon la présente invention, un véhicule conforme à la revendication 1.

Ainsi la pièce de carrosserie et le capot sont directement référencés l'un par rapport à l'autre. La chaîne de côte qui permet de positionner ces deux pièces l'une par rapport à l'autre ne passe plus par la structure du véhicule. On réduit ainsi les jeux de positionnement et, de ce fait, on améliore l'esthétique du véhicule.

Avantageusement, le capot est apte à coopérer avec la pièce de carrosserie lors d'un mouvement du capot pour déterminer la position de la pièce de carrosserie.

Avantageusement, la pièce de carrosserie est montée sur le châssis au moyen d'une liaison non rigide.

Avantageusement, la position de la pièce de carrosserie correspond à une position fermée du capot.

Avantageusement, le véhicule comporte au moins un pion de centrage agencé pour mettre en oeuvre le contact.

Avantageusement, le pion de centrage est apte à venir coopérer avec un orifice ménagé dans un bossage.

Avantageusement, le pion de centrage s'étend en saillie d'une face inférieure du capot et le bossage s'étend en saillie de la pièce de carrosserie.

Avantageusement, le véhicule comporte une butée agencée pour mettre en oeuvre le contact.

Avantageusement, la butée s'étend en saillie d'une face inférieure du capot.

Avantageusement, la butée comprend un bord avant du capot.

Avantageusement, la pièce de carrosserie est une aile du véhicule.

Avantageusement, la pièce de carrosserie est un bouclier de pare-chocs du véhicule.

Avantageusement, le capot est monté mobile par rapport au châssis selon un mouvement qui comporte au moins une translation.

Avantageusement, le capot est monté mobile par rapport au châssis selon un mouvement décomposable en une rotation et une translation.

Avantageusement, le bossage s'étend en saillie d'une face inférieure du capot et le pion de centrage s'étend en saillie de la pièce de carrosserie.

D'autres caractéristiques et avantages de l'invention apparaîtront lors de la description ci-après d'un mode préféré de réalisation de la présente invention donné à titre d'exemple non limitatif. Aux dessins annexés :
La figure 1 est une vue partielle en trois dimensions d'une façade avant d'un véhicule selon un mode préféré de réalisation de l'invention;
La figure 2 est une vue de profil des moyens de liaison entre le capot et le châssis du véhicule de la figure 1 ;
Les figures 3a,b et c sont des vues partielles en trois dimensions de la façade avant du véhicule de la figure 1 montrant les étapes de fermeture du capot ;
La figure 4 est une vue schématique des moyens de sécurisation de la fermeture du capot du véhicule de la figure 1 ;
La figure 5 est une vue partielle en trois dimensions de la façade avant du véhicule de la figure 1 présentant une option supplémentaire ;
La figure 6 est une vue schématique selon la coupe VI-VI de la figure 5 de l'assemblage d'une aile du véhicule de la figure 5, capot fermé ;
La figure 7 est une vue schématique selon la coupe VII-VII de la figure 5 de l'assemblage précédent, capot fermé ;
La figure 8 est une vue schématique selon la coupe VIII-VIII de la figure 5 de l'assemblage précédent, capot fermé ;
La figure 9 est une vue selon la coupe IX-IX de la figure 5 de l'assemblage du bouclier du véhicule capot fermé ; et,
La figure 10 est une vue de dessus partielle des moyens de liaison entre l'aile et le châssis.

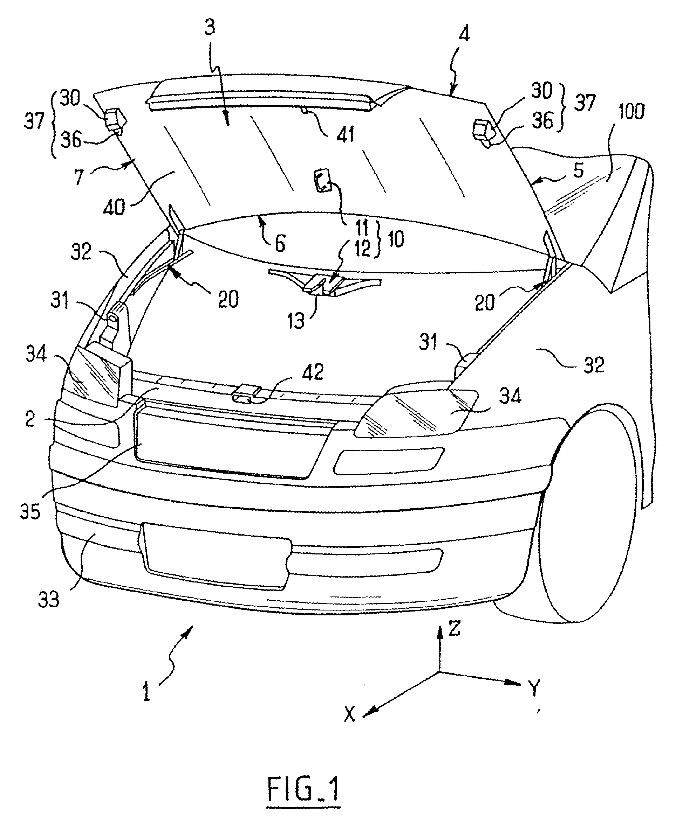

Tout le long de la description qui va suivre, les axes X, Y et Z sont tels qu'illustrés par le repère de la figure 1 : l'axe X est dirigé horizontalement dans le sens de la marche du véhicule, l'axe Y est dirigé horizontalement et perpendiculairement à l'axe X, l'axe Z est dirigé vers haut perpendiculairement aux axes X et Y. Ils forment ainsi un repère direct.

En référence à la figure 1, la façade avant 1 du véhicule selon le présent mode de réalisation comprend une robe comportant un bouclier 33, une calandre 35, deux ailes 32, deux blocs d'optiques 34 situés en extrémité avant des ailes 32, de part et d'autre de la calandre 35, et un capot 3, l'ensemble de la robe habillant un châssis dont une partie 2 seulement est représentée.

Le capot 3 comporte une paroi 40 délimitée par des bords avant 4 plutôt convexe, droit 5 plutôt droit, arrière 6 plutôt concave et gauche 7 plutôt droit.

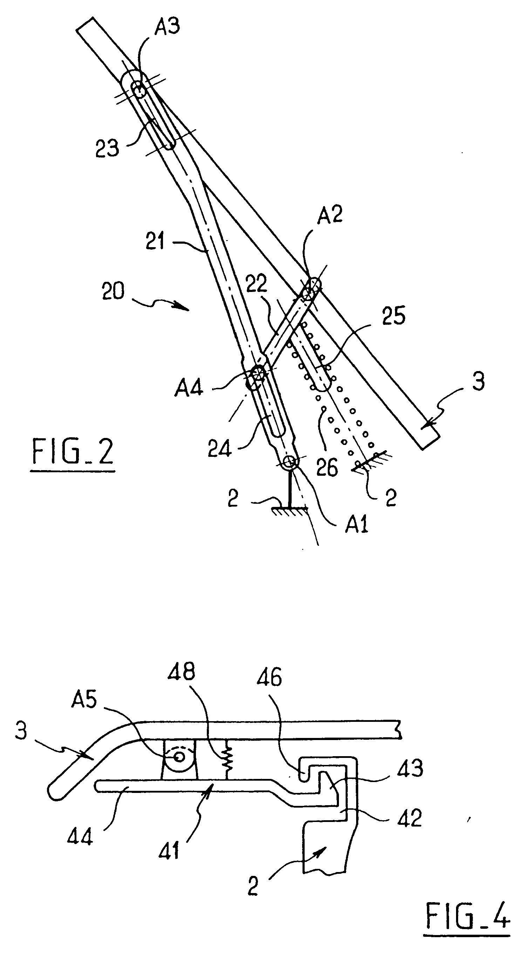

D'autre part, le capot 3 comporte des moyens de liaison 20 aptes à le relier au châssis du véhicule tout en permettant une mobilité par rapport à ce dernier. Ces moyens de liaison 20 s'étendent respectivement à proximité des bords droit 5 et gauche 7 de la paroi 40, tout en restant à proximité du bord arrière 6. Il est à noter que la figure 1 ne présente pas les moyens de liaison 20 complètement montés sur le capot 3, au contraire de la figure 2.

En référence à la figure 2, chacun des moyens de liaison 20 comprend deux bras 21 et 22. Le bras 21 est monté mobile à rotation autour d'un axe A1 sur le châssis du véhicule, l'axe A1 ayant une direction horizontale et perpendiculaire à la direction de marche du véhicule. Une partie arrière du bras 21 comporte une lumière 24 apte à recevoir à coulissement un axe A4, parallèle à l'axe A1. Le bras 21 comporte une seconde partie qui prolonge la première partie vers l'avant selon un angle α.Cette seconde partie comporte une lumière 23 apte à recevoir à coulissement un axe A3, parallèle aux axes A1 et A4, qui est solidaire du capot 3. Le bras 22 est lié solidairement à l'une de ses extrémités à l'axe A4. A son autre extrémité, il comporte un second axe A2, parallèle aux axes A1, A3 et A4, qui lie le bras 22 au capot 3 par un montage mobile à rotation autour de l'axe A2. Le bras 22 comprend en outre un support 25 s'étendant en saillie vers l'arrière du côté de l'axe A1 quand le bras 22 est monté dans l'ensemble des moyens de liaison 20. Le support 25 est monté solidaire du bras 22 et est apte à recevoir un ressort 26 dont l'extrémité arrière est liée solidairement au châssis du véhicule et l'extrémité avant est en appui sur le bras 22. Le ressort 26 est ici un ressort à boudins. Dans un autre mode de réalisation non représenté, le support 25 est monté mobile à rotation par rapport au bras 22 autour d'un axe qui est parallèle à l'un des axes A2, A4.

De nouveau en référence à la figure 1, à proximité du bord arrière 6, le véhicule comporte un organe de verrouillage 10. Cet organe comprend une serrure 12 qui est apte à être liée à une partie non représentée du châssis du véhicule et qui comporte une encoche 13 de réception évasée à son extrémité avant et borgne à son extrémité arrière. L'organe 10 de verrouillage comprend en outre une boucle 11 s'étendant en saillie de la face interne de la paroi 40 du capot 3 et liée à cette paroi 40. La boucle 11 est apte à être reçue par la serrure 12 dans son encoche 13 lors de la fermeture puis du verrouillage du capot 3 en position fermée. D'autre part, l'organe 10 de verrouillage comprend un câble connu en soi, non représenté, commandable depuis l'habitacle du véhicule qui permet le déverrouillage du capot 3 lorsque celui-ci est verrouillé en position fermée : ce câble permet de libérer la boucle 11 de la serrure 12 en vue de l'ouverture du capot.

Le capot 3 comporte une paire de pions 37 s'étendant de part et d'autre de la paroi 40 de manière latérale et symétrique à proximité du bord avant 4 et respectivement à proximité des bords droit 5 et gauche 7, et dont le corps 30 respectif s'étend en saillie de la face inférieure de la paroi 40. A partir des corps 30, un plot 36 de section circulaire s'étend en saillie vers le bord arrière 6 parallèlement à la paroi 40 du capot 3. Les plots 36 sont aptes à s'engager dans des orifices 38 ménagés dans des faces avant de bossages 31 respectifs s'étendant en saillie de la partie interne des ailes 32 respectives.

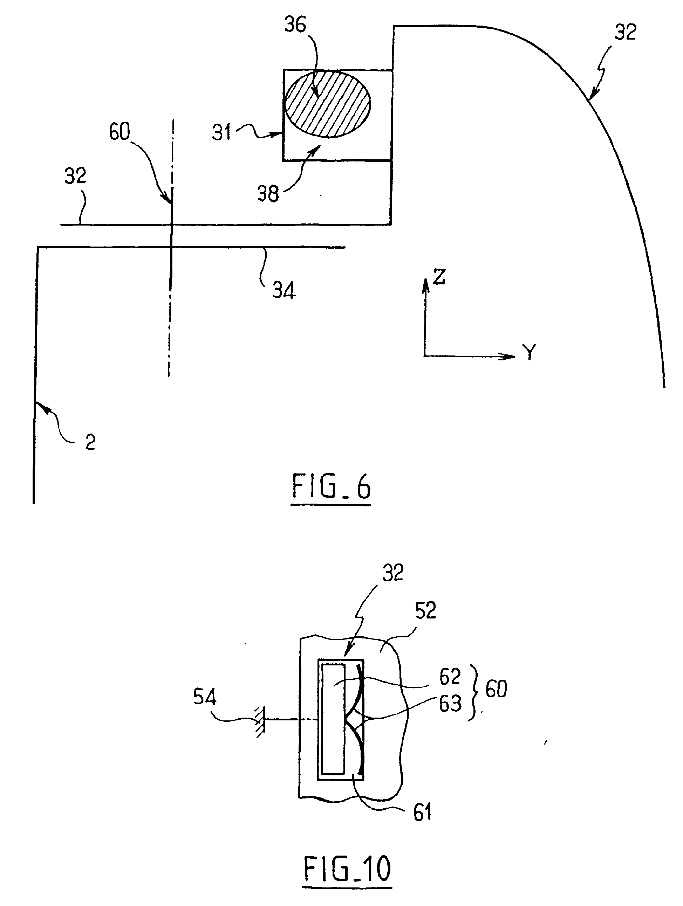

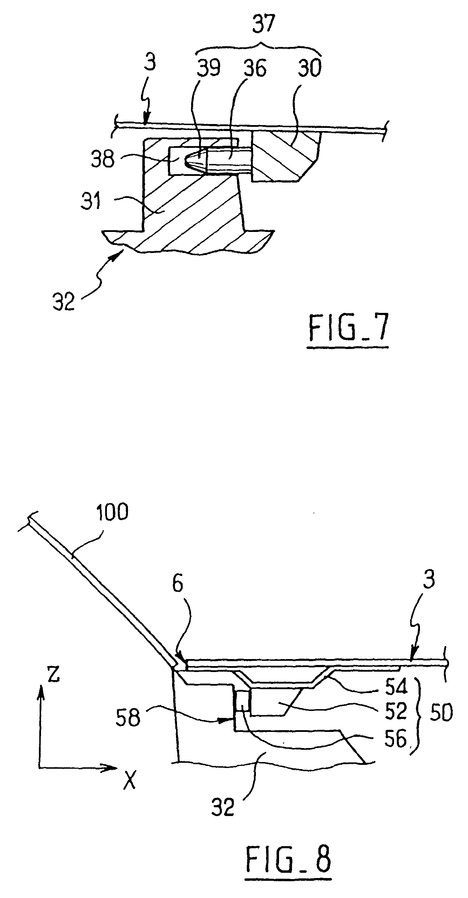

En référence aux figures 6 et 7, illustrant la coopération précitée, le plot 36 comporte une extrémité conique 39 qui est apte à facilité l'insertion plot 36 au sein de l'orifice 38 lors de son engagement. Cet engagement du plot 36 au sein de l'orifice 38 permet de déterminer le positionnement selon l'axe Z de l'aile 32 par rapport au capot 3. Cela permet donc d'avoir un affleurement optimal entre les deux pièces de carrosserie. De même, l'engagement du plot 36 au sein de l'orifice 38 permet de maîtriser le positionnement des deux pièces l'une par rapport à l'autre selon l'axe de Y. Cela permet aussi d'avoir un jeu réduit au maximum entre l'aile 32 et le capot 3.

En effet, l'aile 32 est reliée au châssis 2 par des moyens de liaison 60 schématisés sur la figure 6 par leur axe principal et illustrés selon une réalisation possible par la figure 10. L'aile 32 comporte un prolongement 52 qui est apte à recouvrir ici le bord 54 du châssis 2. Ce prolongement 52 comprend, au niveau des moyens de liaison 60 un orifice 61 traversant, non illustré sur la figure 6, par exemple de forme rectangulaire et constituant une lumière apte à recevoir ces moyens de liaison 60. Ces derniers sont solidaires du rebord 54 du châssis 2 et laissent l'aile 32 mobile en translation dans les directions des axes Y et Z, par rapport au rebord 54 dans la limite de l'orifice 61. En référence à la figure 10, l'orifice 61 est de section quasi rectangulaire. Les moyens de liaisons 60 comportent un plot 62 solidaire du rebord 54 du châssis 2 et s'étendant en saillie de la face supérieure de ce rebord 54. Les moyens de liaisons 60 comprennent aussi au moins une lame de ressort 63 solidaire du plot 62 et située sur le côté du plot 62 dirigé vers l'aile 2. Le plot 62 est apte à être reçu dans l'orifice 61, les lames de ressort 63 étant aptes, quant à elles, à venir en appui avec le bord de l'orifice 61 faisant face au côté du plot 62 précité. La fonction principale de ces lames est de repousser l'aile 32 vers l'extérieur lors de l'ouverture du capot 3, une fois les pions 37 désengagés des orifices 38.

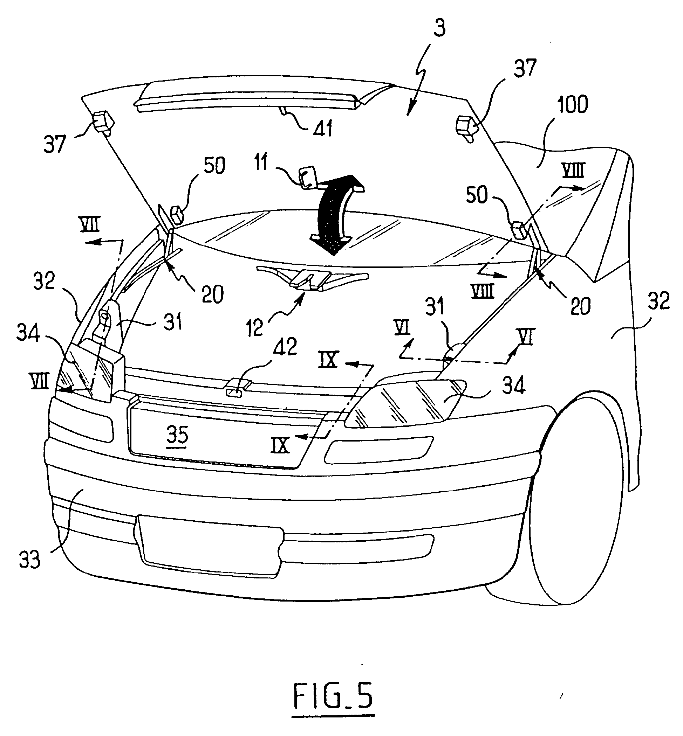

En référence à la figure 4, le véhicule comprend des moyens de sécurisation 41, 42. Ces moyens de sécurisation comprennent un logement 42 qui est aménagé dans la partie avant 2 du châssis du véhicule au-dessus de la calandre 35. L'ouverture du logement 42 est en partie refermée à partir du dessus par une languette 46. D'autre part, les moyens de sécurisation comprennent un loquet 41 comprenant en partie arrière un crochet 43 qui est apte à être reçu librement dans le logement 42 à travers son ouverture, ainsi qu'un bras de manipulation avant 44. Le loquet 41 est monté sur le capot 3 mobile à rotation autour d'un axe A5, l'axe ayant une direction horizontale et perpendiculaire à la direction de marche du véhicule et s étendant entre le bras 44 et le crochet 43. Un ressort de rappel 48 relie le loquet 41 et le capot 3 de manière à ce que le crochet 43, libre de toute manipulation, soit le plus près possible de la paroi du capot 3.

En référence aux figures 5 et 8, le capot 3 comporte une paire de butées 50 s'étendant de part et d'autre de la paroi 40 de manière latérale et symétrique à proximité du bord arrière 6 et respectivement à proximité des bords droit 5 et gauche 7, et dont le corps 52 respectif s'étend en saillie à partir d'un bossage 54 respectif situé sur la face inférieure de la paroi 40. A partir des corps 52, un tampon 56 de section circulaire s'étend en saillie vers le bord arrière 6 parallèlement à la paroi 40 du capot 3. La face arrière de ce tampon 56 est apte à venir en contact avec une face 58 aménagée dans l'aile 32. Cette face 58 est aménagé de manière à être dirigée vers l'avant du véhicule, dans le même sens que l'axe X, et d'être parallèle à la face arrière du tampon 56. Cette butée 50 permet de positionner le capot selon l'axe X à l'issue du mouvement de translation qui sera présenté plus loin de manière à réduire les différences d'alignement selon cette direction entre le capot 3 et les ailes 32 du véhicule.

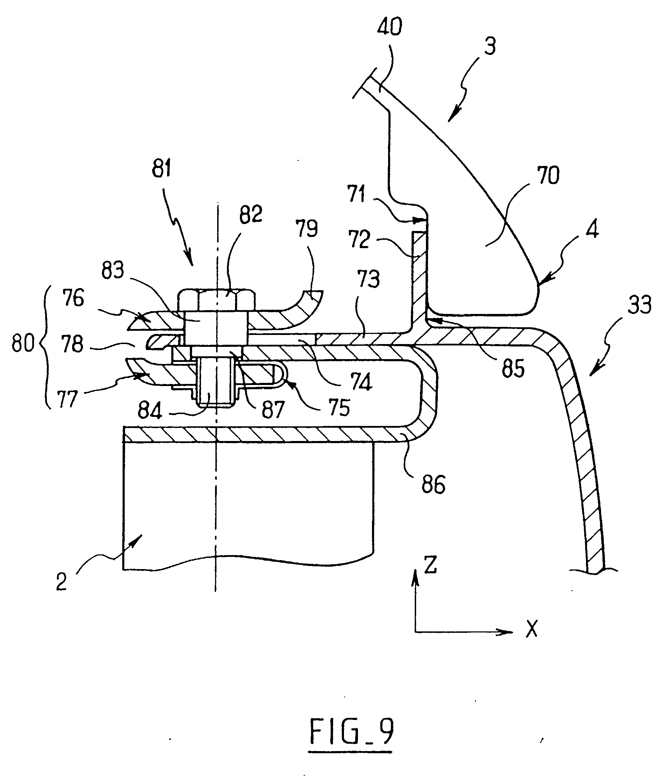

En référence à la figure 9, la paroi 40 du capot 3 comporte un bord avant 4 évasé formant un renforcement 70. Ce renforcement 70 comprend une face arrière 71 ménagée de manière à ce que, le capot 3 une fois en position fermée, elle est verticale et dirigée vers l'arrière dans le sens inverse de l'axe X. Le bouclier 33 comporte un bord 73 le prolongeant horizontalement vers l'arrière au niveau de son extrémité supérieure. Le bouclier 33 comprend, en outre, une excroissance 72 formant une paroi verticale s'étendant en saillie de la face supérieure du bord 73. Cette paroi 72 comporte une face avant verticale 85 et dirigée vers l'avant dans le sens de l'axe X. Cette face 85 est apte à venir en contact surfacique avec la face 71 du capot 3. La face 71 fait alors office de butée permettant de définir, lors de la fermeture du capot, le positionnement du bouclier 33 avec le capot 3 et obtenir ainsi un alignement optimal selon l'axe X des deux pièces.

Le bord 73 comporte un orifice 74 qui le traverse de part en part et qui présente une section oblongue dont la plus grande longueur est dans la direction de l'axe X. D'autre part, le châssis 2 comporte au sommet de sa façade avant technique un rebord 86 en forme de « U » retourné, dont la branche supérieure est dirigée horizontalement vers l'arrière dans le sens inverse de l'axe X. Cette branche supérieure est apte à coopérer avec le bord 73 du bouclier 33 qui, ici, est apte à venir la recouvrir. Des moyens de liaisons permettent de lier le bouclier 33 avec le châssis 2. Ces moyens de liaisons comportent un presseur 80 et un boulon 81. Le presseur 80 comporte deux branches 76,77 disjointes l'une de l'autre pour permettre un espacement 78 entre elles. La branche inférieure 77 comporte un écrou 75. La branche supérieure 76 présente un orifice apte à recevoir une partie 83 du boulon 81 et se termine par une lèvre 79. Les deux branches 76 et 77 sont aptes à prendre en sandwich le bord 73 du bouclier 33 ainsi que la branche supérieure du rebord 86 du châssis 2. L'ensemble est maintenu par un boulon 81 comportant une tête hexagonale 82, puis une première partie 83 de section circulaire présentant un premier diamètre correspondant au diamètre de l'orifice circulaire de la branche supérieure 76 du presseur 80 ainsi qu'à la largeur de la lumière 74 du bord 73, puis d'une seconde partie 87 de section circulaire présentant un second diamètre plus petit que le premier diamètre et correspondant à l'orifice circulaire de la branche supérieure du rebord 86. Enfin, le boulon 81 comprend une troisième partie 84 présentant un filetage apte à coopérer avec celui de l'écrou 75 solidaire de la branche inférieure 77 du presseur 80. La hauteur de la première partie 83 du boulon 81 est légèrement supérieure à la somme des épaisseurs du bord 73 et de la branche supérieure du rebord 86. Ainsi, le bouclier 33 est monté mobile en translation selon l'axe X par rapport au châssis 2. La présence de l'espace 78 entre les deux branches 76 et 77 du presseur 80 permet, en cas de choc, au bouclier 33 de s'enfoncer librement de manière suffisante pour ne pas détériorer la façade avant technique.

On va maintenant expliquer le fonctionnement de ces éléments.

En référence aux figures 3a à 3c, on suppose que le capot 3 est relevé en position ouverte comme illustré à la figure 3a. Les axes A3 et A4 sont à l'extrémité la plus éloigné de l'axe A1 des lumières respectives 23 et 24, et ce, sous la poussé qui est exercée par le ressort 26 sur son support 25 relié au bras 22. Les moyens de liaison 20 sont donc tels qu'illustrés à la figure 2.

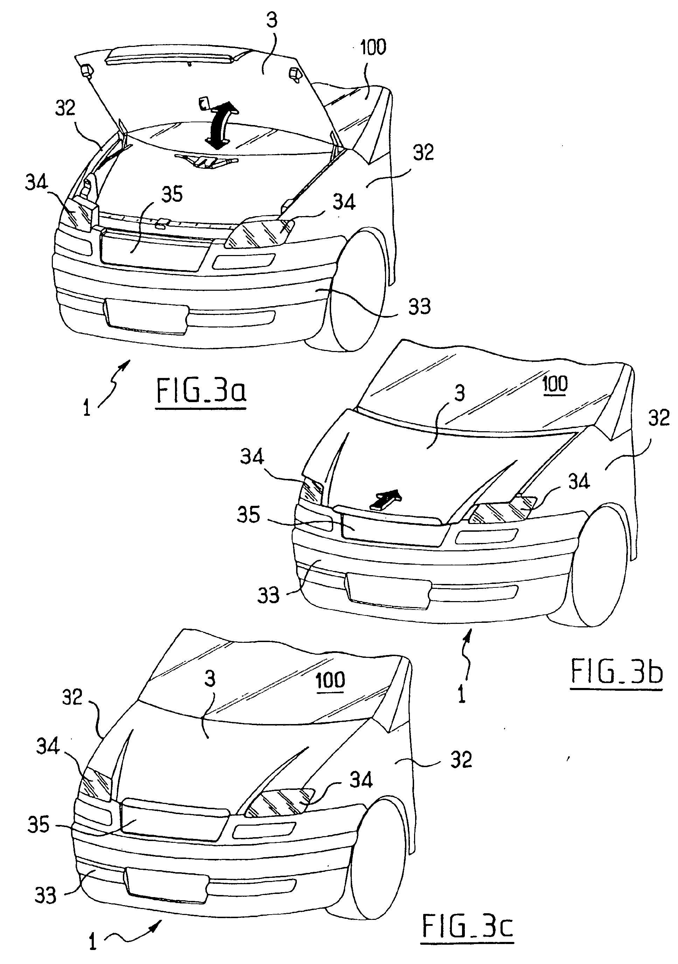

Sous l'action de l'opérateur, la fermeture du capot commence par une rotation vers le bas autour de l'axe A1 des moyens de liaisons 20, rotation jusqu'à ce que le capot 3 atteigne la position de la figure 3b. Les axes A3 et A4 restent alors situés à la même position au sein de leurs lumières respectives, sous la poussé du ressort 26. D'autre part, la boucle 11 se trouve alors devant l'encoche 13 de la serrure 12. De même, le crochet 43 du loquet 41 se trouve devant l'ouverture du logement 42 de manière non engagée.

Sous l'action de l'opérateur, la fermeture se poursuit alors par une translation du capot suivant une direction légèrement relevée par rapport à l'horizontale et en direction de l'arrière du véhicule. Les axes A3 et A4 coulissent dans leurs lumières respectives 23,24 vers les extrémités arrières de ces dernières. Le mouvement de translation va :
- comprimer les ressorts 26 ;
- engager librement le crochet 43 du loquet 41 dans le logement 42, le ressort 48 assurant que le crochet 43 se relève bien derrière la languette 46 ;
- engager la boucle 11 dans l'encoche 13 de la serrure 12, jusqu'à ce que le verrouillage de la serrure 12 s'enclenche.
- Engager chacun des plots 36 dans l'ouverture des bossages 31 respectifs des ailes 32 respectives et définir le positionnement des ailes par rapport au capot selon les axes Y et Z
- Mettre en butée les tampons 56 sur la face 58 et déterminer le positionnement des ailes par rapport au capot selon l'axe X
- Mettre en butée la face 71 du capot 3 sur la face avant 85 du bouclier 33 et déterminer le positionnement du bouclier par rapport au capot selon l'axe X.

Le capot 3 se trouve donc en position fermée verrouillée comme cela est illustré par la figure 3c.

Inversement, on suppose que le capot est en position fermée verrouillée comme illustré à la figure 3c. L'action du câble de déverrouillage désactive le verrouillage de la serrure 12, libérant la boucle 11. Sous l'action de la poussé des ressorts 26, le capot commence un mouvement de translation suivant une direction légèrement rabaissée par rapport à l'horizontale et en direction de l'avant du véhicule, puis le crochet 43 vient en butée sur la languette 46. Par action de l'opérateur sur le bras 44 du loquet 41, le crochet 43 est ensuite libéré et se désengage du logement 42. Le mouvement de translation du capot se poursuit sous la poussée du ressort 26. La boucle 11 se désengage de l'encoche 13 de la serrure 12, les plots 36 se désengagent des ouvertures des bossages 31. Le mouvement de translation s'interrompt lorsque les axes A3 et A4 viennent buter dans les extrémités avant des lumières respectives 23,24. La position du capot à ce moment est illustrée par la figure 3b. Ensuite, un mouvement de rotation effectué par l'opérateur vers le haut autour de l'axe A1 permet de relever le capot en position ouverte.

Bien entendu, on pourra apporter à la présente invention de nombreuses modifications sans sortir du cadre de celle-ci.

Notamment, les moyens de liaison peuvent être des charnières ne permettant qu'un montage du capot mobile à rotation selon un seul axe sur le châssis.

Le ressort de rappel du loquet de sécurisation peut être un ressort de traction ou bien un ressort de torsion monté sur l'axe.

Le loquet peut être fixé solidairement au capot à son extrémité opposée au crochet, le corps du loquet servant de ressort de rappel.

Les pions 37 peuvent s'étendre en saillie à partir de la face interne des ailes 32 et les bossages 31 de la face inférieure de la paroi 40.

Le ressort 63 peut être à une seule lame.

Les moyens de liaisons 60 peuvent être des presseurs 80.

On pourra prévoir que le capot permet de déterminer la position d'une seule pièce parmi le bouclier ou une aile. De plus, il pourra permettre de déterminer la position d'une autre pièce que celles-ci, et d'elle seule.

## Revendications

1. Véhicule comportant un châssis (2), un capot (3) monté mobile par rapport au châssis et au moins une pièce de carrosserie (32;33), le véhicule étant agencé de telle sorte qu'un contact de la pièce de carrosserie avec le capot détermine une position de la pièce de carrosserie par rapport au capot **caractérisé en ce que** la pièce de carrosserie est montée sur le châssis au moyen d'une liaison non rigide.

2. Véhicule selon la revendication 1 **caractérisé en ce que** le capot est apte à coopérer avec la pièce de carrosserie lors d'un mouvement du capot pour déterminer la position de la pièce de carrosserie.

3. Véhicule selon la revendication 1 **caractérisé en ce que** la position de la pièce de carrosserie correspond à une position fermée du capot.

4. Véhicule selon l'une des revendications précédentes **caractérisé en ce qu'**il comporte au moins un pion (37) de centrage agencé pour mettre en oeuvre le contact.

5. Véhicule selon la revendication 4 **caractérisé en ce que** le pion de centrage est apte à venir coopérer avec un orifice (38) ménagé dans un bossage (31).

6. Véhicule selon la revendication 4 ou 5 **caractérisé en ce que** le pion de centrage s'étend en saillie d'une face inférieure du capot et le bossage s'étend en saillie de la pièce de carrosserie

7. Véhicule selon l'une des revendications précédentes **caractérisé en ce qu'**il comporte une butée (56;71) agencée pour mettre en oeuvre le contact.

8. Véhicule selon la revendication 7 **caractérisé en ce que** la butée (71) s'étend en saillie d'une face inférieure du capot.

9. Véhicule selon la revendication 7 ou 8 **caractérisé en ce que** la butée s'étend sur un bord avant (4) du capot.

10. Véhicule selon l'une des revendications précédentes **caractérisé en ce que** la pièce de carrosserie est une aile du véhicule (32).

11. Véhicule selon l'une des revendications précédentes **caractérisé en ce que** la pièce de carrosserie est un bouclier (33) de pare-chocs du véhicule.

12. Véhicule selon l'une des revendications précédentes **caractérisé en ce que** le capot est monté mobile par rapport au châssis selon un mouvement qui comporte au moins une translation.

13. Véhicule selon l'une des revendications précédentes **caractérisé en ce que** le capot est monté mobile par rapport au châssis selon un mouvement décomposable en une rotation et une translation.

## Claims

1. Vehicle including a chassis (2), a hood (3) mobile relative to the chassis and at least one body component (32; 33), the vehicle being arranged in such a way that contact of the body component with the hood determines a position of the body component relative to the hood, which vehicle is **characterized in that** the body component is mounted on the chassis by means of a non-rigid connection.

2. Vehicle according to claim 1 **characterized in that** the hood is adapted to co-operate with the body component during movement of the hood to determine the position of the body component.

3. Vehicle according to claim 1 **characterized in that** the position of the body component corresponds to a closed position of the hood.

4. Vehicle according to any preceding claim, **characterized in that** it includes at least one centring bracket (37) adapted to provide the contact.

5. Vehicle according to claim 4 **characterized in that** the centring bracket is adapted to co-operate with an orifice (38) in a boss (31).

6. Vehicle according to claim 4 or 5 **characterized in that** the centring bracket projects from a bottom face of the hood and the boss projects from the body component.

7. Vehicle according to any preceding claim, **characterized in that** it includes an abutment (56; 71) adapted to provide the contact.

8. Vehicle according to claim 7 **characterized in that** the abutment (71) projects from a bottom face of the hood.

9. Vehicle according to claim 7 or 8 **characterized in that** the abutment is at a front edge (4) of the hood.

10. Vehicle according to any preceding claim **characterized in that** the body component is a wing of the vehicle (32).

11. Vehicle according to any preceding claim **characterized in that** the body component is a bumper (33) of the vehicle.

12. Vehicle according to any preceding claim **characterized in that** the hood is mobile relative to the chassis with a movement that includes at least one movement in translation.

13. Vehicle according to any preceding claim **characterized in that** the hood is mobile relative to the chassis with a movement that includes rotation and movement in translation.

## Patentansprüche

1. Fahrzeug umfassend ein Fahrgestell (2), eine Motorhaube (3), die bezüglich dem Fahrgestell beweglich montiert ist, und mindestens ein Karosserieteil (32; 33), wobei das Fahrzeug derart gestaltet ist, dass ein Kontakt des Karosserieteils mit der Motorhaube eine Stellung des Karosserieteils gegenüber der Motorhaube festlegt, und **dadurch gekennzeichnet ist, dass** das Karosserieteil mittels einer nicht starren Verbindung auf das Fahrgestellt montiert ist.

2. Fahrzeug nach Anspruch 1, **dadurch gekennzeichnet, dass** die Motorhaube bei einer Bewegung der Motorhaube mit dem Karosserieteil zusammenwirken kann, um die Stellung des Karosserieteils festzulegen.

3. Fahrzeug nach Anspruch 1, **dadurch gekennzeichnet, dass** die Stellung des Karosserieteils einer geschlossenen Stellung der Motorhaube entspricht.

4. Fahrzeug nach einem der vorangehenden Ansprüche, **dadurch gekennzeichnet, dass** es mindestens einen Zentrierstift (37) umfasst, der so angeordnet ist, dass er den Kontakt herstellt.

5. Fahrzeug nach Anspruch 4, **dadurch gekennzeichnet, dass** der Zentrierstift in der Lage ist, mit einer Öffnung (38) zusammenzuwirken, die in einer Erhebung (31) ausgespart ist.

6. Fahrzeug nach Anspruch 4 oder 5, **dadurch gekennzeichnet, dass** sich der Zentrierstift von einer Unterseite der Motorhaube vorspringend erstreckt und sich die Erhebung von dem Karosserieteil vorspringend erstreckt.

7. Fahrzeug nach einem der vorangehenden Ansprüche, **dadurch gekennzeichnet, dass** es einen Anschlag (56; 71) umfasst, der so angeordnet ist, dass er den Kontakt herstellt.

8. Fahrzeug nach Anspruch 7, **dadurch gekennzeichnet, dass** sich der Anschlag (71) von einer Unterseite der Motorhaube vorspringend erstreckt.

9. Fahrzeug nach Anspruch 7 oder 8, **dadurch gekennzeichnet, dass** sich der Anschlag auf einer Vorderkante (4) der Motorhaube erstreckt.

10. Fahrzeug nach einem der vorangehenden Ansprüche, **dadurch gekennzeichnet, dass** das Karosserieteil ein Kotflügel (32) des Fahrzeuges ist.

11. Fahrzeug nach einem der vorangehenden Ansprüche, **dadurch gekennzeichnet, dass** das Karosserieteil eine Stoßstangenabdeckung bzw. eine Stoßstange (33) des Fahrzeuges ist.

12. Fahrzeug nach einem der vorangehenden Ansprüche, **dadurch gekennzeichnet, dass** die Motorhaube bezüglich des Fahrgestells gemäß einer Bewegung, die mindestens eine Translationsbewegung umfasst, beweglich montiert ist.

13. Fahrzeug nach einem der vorangehenden Ansprüche, **dadurch gekennzeichnet, dass** die Motorhaube bezüglich des Fahrgestells gemäß einer Bewegung, die in eine Rotation und eine Translationsbewegung zerlegbar ist, beweglich montiert ist.
